# EUROPÄISCHE PATENTSCHRIFT

(11) **EP 3 233 582 B1**
(45) Veröffentlichungstag und Bekanntmachung des Hinweises auf die Patenterteilung: **27.11.2019**
(21) Anmeldenummer: 15807647.1
(22) Anmeldetag: 07.12.2015
(51) Int. Cl.: B60R 21/34, B60R 19/18, B60R 19/28

(54) **FUSSGÄNGERSCHUTZVORRICHUNG FÜR EIN KRAFTFAHRZEUG**
PEDESTRIAN PROTECTION DEVICE FOR A MOTOR VEHICLE
DISPOSITIF DE PROTECTION DE PIÉTON POUR VÉHICULE AUTOMOBILE

(30) Priorität: 18.12.2014 DE 102014226363
(43) Veröffentlichungstag der Anmeldung: 25.10.2017
(73) Patentinhaber: Bayerische Motoren Werke Aktiengesellschaft, 80809 München (DE)
(72) Erfinder: AKIF, Öztzan, 80937 München (DE); FICHTINGER, Gerhard, 85630 Grasbrunn (DE); RIEDL, Wilhelm, 85276 Pfaffenhofen (DE)
(86) Internationale Anmeldenummer: PCT/EP2015/078889
(87) Internationale Veröffentlichungsnummer: WO 2016/096515

(56) Entgegenhaltungen:
- EP-A2- 2 266 846
- WO-A1-93/00232
- DE-A1-102011 017 512
- DE-A1-102012 112 636
- DE-U1- 29 700 017

## Beschreibung

Die vorliegende Erfindung bezieht sich auf eine Fußgängerschutzvorrichtung für ein Kraftfahrzeug mit einer Stoßfängerverkleidung und einem Stoßfängerquerträger, zwischen denen ein Deformationselement angeordnet ist.

Ein bekannter Vorderwagen eines Kraftfahrzeugs hat beispielsweise einen Stoßfängerquerträger, der an vorderen Enden von Längsträgern befestigt ist, und eine Stoßfängerverkleidung, wobei zwischen der Stoßfängerverkleidung und dem Stoßfängerquerträger zum Schutz von Fußgängern ein weicher, auf einem vergleichsweise niedrigen Lastniveau verformbarer Schaum angeordnet ist. Der weiche Schaum ist aufgrund eines Fußgängerschutzes angeordnet, um einen Fußgänger gegebenenfalls vor einer direkten unmittelbaren Kollision mit einer harten, steifen Struktur, wie beispielsweise dem Stoßfängerquerträger, zu schützen.

Des Weiteren gibt es ein Erfordernis, dass in einem sehr niedrigen Geschwindigkeitsbereich von bis zu beispielsweise 4 km/h, in dem der Fußgängerschutz aufgrund der geringen Geschwindigkeit nicht relevant ist, das Kraftfahrzeug bei einer Kollision schadensfrei bleibt.

Darüber hinaus gibt es bei einer etwas höheren Geschwindigkeit, die ebenfalls noch nicht für den Fußgängerschutz relevant ist, das Erfordernis, dass ein Schaden bei der Kollision möglichst klein ist und beispielsweise eine Kühlerstruktur, die sich in dem Vorderwagenbereich befindet, nicht beschädigt wird.

Bei einer Kollision mit einer vergleichsweise hohen Geschwindigkeit, die für einen Fußgängerschutz nicht mehr relevant ist, liegt ein Schwerpunkt auf der Auslegung des Kraftfahrzeugs und dessen Crashstruktur bei einem Insassenschutz. Hierfür ist der Vorderwagen bzw. ein Fahrzeugbug derart ausgelegt, dass er über eine bestimmte Verformungsstrecke sich energieabsorbierend verformt.

Die verschiedenen Anforderungen stehen zum Teil im Gegensatz zueinander und erfordern ein vergleichsweise langen Fahrzeugüberhang und damit höheres Gewicht und eine nachteilige Beeinflussung der Fahrdynamik.

Zum Lösen der daraus entstehenden Zielkonflikte wurde beispielsweise in der DE 102010054641 A1 eine Stoßfängeranordnung mit einem Querträger vorgeschlagen, der über Crashboxen an der Fahrzeugkarosserie befestigt ist. In Fahrtrichtung vor dem Querträger ist ein Fußgängerschutzelement für einen weichen Anprall eines Fußgängers ausgebildet. Zusätzlich ist ein schwenkbares Energieabsorptionselement vorgesehen, das vor das Fußgängerschutzelement verschwenkbar ist und hierdurch eine erhöhte Energieabsorption bei Kollisionen ermöglicht, bei denen eine höhere Kollisionsenergieabsorptionsfähigkeit der Crashstruktur des Kraftfahrzeugs erforderlich ist.

Die DE 102012112636 A1 zeigt ebenfalls eine Stoßfängeranordnung mit einem Stoßfängerquerträger und einem Fußgängerschutzelement, das von einem steifen Zustand in einen vergleichsweise weichen Zustand, der einem Fußgängerschutz dient, mittels eines Aktuators umgeschaltet werden kann.

Den in der DE 102010054641 A1 und der DE 102012112636 A1 beschriebenen Stoßfängeranordnungen ist gemeinsam, dass hierfür eine Crash- bzw. Pre-Crash-Sensorik erforderlich ist, wobei auf Grundlage der Ausgangssignale der Sensorik zwischen einem harten, steifen Zustand der Crashstruktur mit hoher Kollisionsenergieabsorptionsfähigkeit und einem weichen Zustand der Crashstruktur mit zu Gunsten des Fußgängerschutzes geringer Kollisionsenergieabsorptionsfähigkeit umgeschaltet werden kann.

Die EP2266846 offenbart eine Fußgängerschutzvorrichtung für Kraftfahrzeuge nach dem Oberbegriff des Anspruchs 1 und/oder 7.

Es ist daher die Aufgabe der vorliegenden Erfindung, eine Fußgängerschutzvorrichtung zu schaffen, die einfach aufgebaut ist und unabhängig von einer Sensorik bzw. einem Aktuator funktioniert.

Diese Aufgabe wird durch eine Fußgängerschutzvorrichtung für ein Kraftfahrzeug gelöst, die die Merkmale von Patentanspruch 1 oder Patentanspruch 7 aufweist.

Vorteilhafte Ausgestaltungen der Erfindung sind in den abhängigen Patentansprüchen genannt.

Eine Fußgängerschutzvorrichtung für ein Kraftfahrzeug, beispielsweise für einen Kraftfahrzeugbug oder ein Kraftfahrzeugheck, hat einen Stoßfängerquerträger, an dessen Außenseite, d.h. der nach vorne bzw. zu einer Fahrzeugaußenhaut gerichteten Seite (Vorderseite), ein Deformationselement angeordnet ist. Insbesondere ist das Deformationselement, d.h. insbesondere ein Deformationsbereich des Deformationselements, zwischen einer Stoßfängerverkleidung, die eine Fahrzeugaußenhaut bildet, und dem Stoßfängerquerträger angeordnet. Das Deformationselement weist ein erstes Element und ein zweites Element auf, die bei einer Kollision relativ zueinander verschiebbar sind. Ferner weist die Fußgängerschutzvorrichtung einen Verriegelungsmechanismus auf, der abhängig von einer Verschiebegeschwindigkeit und damit von einer Kollisionsgeschwindigkeit des Kraftfahrzeugs unter Ausnutzung einer Massenträgheit eines Verriegelungselements, das an dem ersten Element oder dem zweiten Element angeordnet ist bzw. gelagert ist, zwischen einem verriegelten Zustand, bei dem eine Verschiebung des ersten Elements relativ zu dem zweiten Element zumindest teilweise durch insbesondere formschlüssigen Eingriff unterbunden ist, und einem entriegelten Zustand, bei dem eine Verschiebung des ersten Elements zugelassen ist, verstellbar ist.

Der Begriff Stoßfängerquerträger kann jeglichen ein Querträger im Bereich des Kraftfahrzeugbugs oder des Kraftfahrzeughecks umfassen.

Hierdurch sind keine Kollisionssensorik und keine Aktuatorik notwendig, um eine Verriegelung des Verriegelungsmechanismus zu steuern. Somit kann das Deformationselement mit einfachen Mitteln unter Ausnutzung der Massenträgheit zwischen einem weichen Zustand, in dem eine Relativverschiebung zwischen dem ersten Element und dem zweiten Element ermöglicht ist, und einem steifen Zustand, in dem eine Relativverschiebung zwischen dem ersten Element und dem zweiten Element unterbunden ist, abhängig von der Verschiebegeschwindigkeit, die sich durch die Kollision ergibt, geschaltet werden.

Eine Relativverschiebung zwischen dem ersten Element und dem zweiten Element erfolgt dabei im Wesentlichen in Längsrichtung des Kraftfahrzeugs, welches üblicherweise auch eine Hauptrichtung bei einer Frontalkollision des Kraftfahrzeugs ist. Der Verriegelungsmechanismus gemäß der vorliegenden Erfindung wirkt unabhängig von einer Kollisionssensorik selbsttätig durch Ausnutzung der Massenträgheit des Verriegelungselements.

Gemäß einer bevorzugten Weiterbildung ist der Verriegelungsmechanismus unterhalb eines Kollisionsgeschwindigkeitsschwellwerts, und damit eines Verschiebegeschwindigkeitsschwellwerts verriegelt und bei Erreichen des Kollisionsgeschwindigkeitsschwellwerts entriegelt.

Damit kann die Struktur des Vorderwagens bzw. des Hinterwagens des Kraftfahrzeugs bei einer verhältnismäßig niedrigen Geschwindigkeit hinreichend steif ausgebildet werden, so dass keine strukturelle Beschädigung beispielsweise der Stoßfängerverkleidung oder dergleichen durch zu starke Verformung erfolgt. Hierdurch können Reparaturkosten bei Kollisionen bei sehr niedriger Geschwindigkeit wie beispielsweise bei sogenannten Parkremplern minimiert werden und lediglich auf das Ausbessern von beispielsweise Lackschäden begrenzt werden.

Oberhalb des Kollisionsgeschwindigkeitsschwellwerts, der für einen Fußgängerschutz relevant ist, ist der Verriegelungsmechanismus entriegelt und das Deformationselement kann mit einer verhältnismäßig geringen Kraft zum Schutz von Fußgängern in seiner Länge verändert werden, d.h. durch Relativverschiebung des ersten Elements und des zweiten Elements zueinander zusammengeschoben werden.

Gemäß einer bevorzugten Weiterbildung der Fußgängerschutzvorrichtung der vorliegenden Erfindung ist das Verriegelungselement mittels einer Federeinrichtung vorgespannt oder mittels der Federeinrichtung vorspannbar. Beispielsweise ist das Verriegelungselement bei einer Verschiebung des ersten Elements relativ zu dem zweiten Element in eine Vertiefung des zweiten Elements derart eingreifbar bzw. einrastbar, dass eine weitere Verschiebung des ersten Elements relativ zu dem zweiten Element unterbunden ist.

Durch den Eingriff des Verriegelungselements mit der Vertiefung erfolgt eine formschlüssige Verbindung zwischen dem ersten Element und dem zweiten Element, so dass eine Relativverschiebung zwischen dem ersten Element und dem zweiten Element nicht mehr möglich ist. Die Federeinrichtung ist dahingegen vorteilhaft, dass eine Einrastung des Verriegelungselements mit der Vertiefung zuverlässig hergestellt wird und bestehen bleibt.

Bevorzugt ist dabei die Federeinrichtung in einem Ruhezustand im Wesentlichen entspannt, das heißt in einem Zustand, in dem keine Kollisionslast auf das Deformationselement wirkt.

Dies hat den Vorteil, dass die Federeinrichtung ihre Federspannkraft im Normalzustand nicht verliert.

Der Verriegelungsmechanismus weist dabei bevorzugt eine Kontaktfläche auf, über die das Verriegelungselement gegen die Federkraft der Federeinrichtung bewegbar ist und damit vorspannbar ist, bevor das Verriegelungselement die Vertiefung erreicht.

Mit anderen Worten wird die Kollisionslast für eine Vorspannung der Federeinrichtung genutzt.

Bevorzugt sind das Verriegelungselement, die Federeinrichtung und die Vertiefung derart zusammenwirkend ausgebildet, dass bei einer langsamen Verschiebung des ersten Elements relativ zu dem zweiten Element das Verriegelungselement in die Vertiefung einrastet und bei einer schnellen Verschiebung des ersten Elements relativ zu dem zweiten Element das Verriegelungselement nicht in die Vertiefung einrastet.

Hierdurch ist ein selbsttätiger Mechanismus geschaffen, der lediglich eine Massenträgheit des Verriegelungselements für seine Funktion nutzt. Demnach erfolgt bei einer niedrigen Verschiebegeschwindigkeit und damit einer niedrigen Kollisionsgeschwindigkeit ein Einrasten und das Deformationselement wirkt demnach steif. Bei der schnellen Verschiebegeschwindigkeit und damit der schnellen Kollisionsgeschwindigkeit rastet das Verriegelungselement nicht ein - bei der schnellen Verschiebung gleitet das Verriegelungselement insbesondere über die Vertiefung weg - und eine weitere Verschiebung zwischen dem ersten Element und dem zweiten Element ist ermöglicht, wodurch das Deformationselement insgesamt weich ist.

Die Federeinrichtung kann zusätzlich mit einer Dämpfungseinrichtung versehen sein, die eine Bewegung des Verriegelungselements geeignet dämpft. Damit ist ein Einrasten/Nichteinrasten des Verriegelungselements geeignet steuerbar.

Ferner ist gemäß der Fußgängerschutzvorrichtung der vorliegenden Erfindung das Deformationselement derart angepasst, dass es in einem verriegelten Zustand des Verriegelungsmechanismus Kollisionsenergie durch plastische Verformung und/oder sprödes Versagen des Deformationselements über eine vorgegebene Deformationsstrecke absorbieren kann. Eine derartige Deformationsstrecke kann beispielsweise 60 mm bis 110 mm betragen.

Je nach Kollisionslast und damit der Geschwindigkeit bei der Kollision kann das Deformationselement demnach vollständig steif reagieren und die Kollisionslast auf die dahinter liegende Crashstruktur des Fahrzeugs übertragen, oder ein Lastschwellwert des verriegelten Deformationselements ist überschritten und es wird verformt und kann damit Kollisionsenergie zum Schutz anderer Bauteile und der Fahrzeuginsassen absorbieren.

Das Deformationselement kann eine Länge von 50 bis 150 mm aufweisen. Bevorzugt kann das Deformationselement eine Länge zwischen 70 und 110 mm aufweisen.

Bevorzugt ist das erste Element relativ zu dem zweiten Element in einem entriegelten Zustand des Deformationselements über eine Strecke von beispielsweise 60 bis 110 mm bewegbar.

Das erste Element kann ein zylinderförmiges Element sein, das in einer entsprechenden Führung des zweiten Elements verschiebbar ist. Das Verriegelungselement kann an dem ersten Element oder an dem zweiten Element gelagert sein.

Gemäß einer Alternativen Ausführungsform der vorliegenden Erfindung kann das erste Element - oder das zweite Element - eine elastische verformbare Wand, die die Federeinrichtung ausbildet, mit einem insbesondere freien Ende aufweisen, wobei das freie Ende das Verriegelungselement ausbildet.

Das freie Ende der verformbaren Wand ist mit einer Vertiefung in dem zweiten Element - oder in dem ersten Element - einrastbar.

Das freie Ende der verformbaren Wand ist bei einer Verschiebung entlang einer Kontaktfläche an dem zweiten Element - oder an dem ersten Element - vorspannbar.

Das erste Element - oder das zweite Element - kann insbesondere zwei gegenüberliegende elastische verformbare Wände aufweisen, die an gegenüberliegenden Seiten des ersten Elements - oder des zweiten Elements - ausgebildet sind. Dabei können die beiden Wände insbesondere symmetrisch zueinander angeordnet sein. Die beiden Wände können dabei in entgegengesetzte Querrichtungen verformbar sein.

Das erste Element - oder das zweite Element - können auch drei oder vier oder mehr wie vorstehend beschriebene elastisch verformbare Wände aufweisen.

Vorstehend aufgeführte Weiterbildungen der Erfindung können soweit möglich und sinnvoll beliebig miteinander kombiniert werden.

Es folgt eine Kurzbeschreibung der Figuren.
- Fig. 1: zeigt schematisch eine Fußgängerschutzvorrichtung gemäß einem ersten Ausführungsbeispiel der vorliegenden Erfindung.
- Fig. 2: zeigt schematisch die Fußgängerschutzvorrichtung gemäß dem ersten Ausführungsbeispiel der vorliegenden Erfindung mit vorgespannter Federeinrichtung.
- Fig. 3: zeigt schematisch die Fußgängerschutzvorrichtung gemäß dem ersten Ausführungsbeispiel der vorliegenden Erfindung in einem verriegelten Zustand.
- Fig. 4: zeigt schematisch die Fußgängerschutzvorrichtung gemäß dem ersten Ausführungsbeispiel der vorliegenden Erfindung in einem entriegelten Zustand.
- Fig. 5: ist eine schematische Perspektivansicht einer Fußgängerschutzvorrichtung gemäß einem zweiten Ausführungsbeispiel der vorliegenden Erfindung.
- Fig. 6: ist eine schematische Seitenansicht der Fußgängerschutzvorrichtung gemäß dem zweiten Ausführungsbeispiel der vorliegenden Erfindung.
- Fig. 7: ist eine schematische Seitenansicht der Fußgängerschutzvorrichtung gemäß dem zweiten Ausführungsbeispiel der vorliegenden Erfindung in einem Zustand, in dem eine Federeinrichtung vorgespannt ist.
- Fig. 8: ist eine schematische Seitenansicht der Fußgängerschutzvorrichtung gemäß dem zweiten Ausführungsbeispiel der vorliegenden Erfindung in einem verriegelten Zustand.
- Fig. 9: ist eine schematische Seitenansicht der Fußgängerschutzvorrichtung gemäß dem zweiten Ausführungsbeispiel der vorliegenden Erfindung in einem entriegelten Zustand.

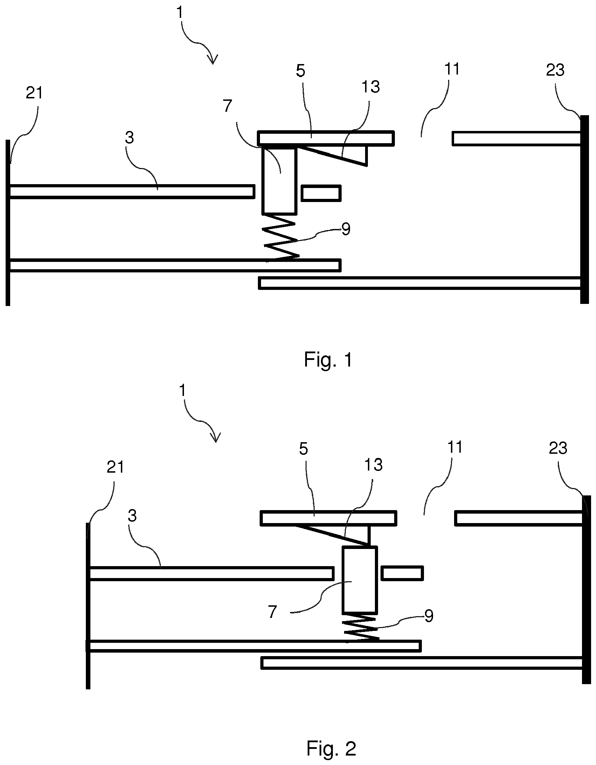

Im Folgenden sind Ausführungsbeispiele der vorliegenden Erfindung unter Bezugnahme auf Figuren 1 bis 9 beschrieben.

Figuren 1 bis 4 zeigen eine Fußgängerschutzvorrichtung für ein Kraftfahrzeug gemäß einem ersten Ausführungsbeispiel der vorliegenden Erfindung.

Die Fußgängerschutzvorrichtung 1 ist an einem Frontend des Kraftfahrzeugvorderwagens, insbesondere einem Kraftfahrzeugbug, mit einem Stoßfängerquerträger 23 montiert. Insbesondere ist die Fußgängerschutzvorrichtung in einem Raum zwischen einer Fahrzeugaußenhaut, das heißt einer Stoßfängerverkleidung 21, und dem Stoßfängerquerträger 23 angeordnet. Wie in Figur 1 gezeigt ist, hat die Fußgängerschutzvorrichtung ein Deformationselement 1 mit einem ersten Element 3 und einem zweiten Element 5. Das erste Element 3 und das zweite Element 5 sind prinzipiell zueinander verschiebbar bzw. verlagerbar ausgebildet. Insbesondere ist das erste Element 3 in das zweite Element 5 verschiebbar. Das zweite Element 5 ist an dem Stoßfängerquerträger 23 fixiert und mit diesem starr verbunden. Das Deformationselement 1 weist zudem einen Verriegelungsmechanismus auf, der eine Verschiebung des ersten Elements 3 in Bezug auf das zweite Element 5 einschränken kann. Der Verriegelungsmechanismus hat ein Verriegelungselement 7, das mittels einer Feder 9 in Querrichtung vorspannbar und verschiebbar ist. Mit anderen Worten ist das Verriegelungselement 7 quer zu einer Fahrzeuglängsrichtung verlagerbar in/an dem ersten Element 3 gelagert. Der Verriegelungsmechanismus weist ferner eine Kontaktfläche 13 auf, die an einer Innenseite des zweiten Elements 5 ausgebildet ist, sowie eine Ausnehmung 11, die ebenfalls in dem zweiten Element 5, das heißt an dessen Umfang, ausgebildet ist.

Die Funktion des Deformationselements 1 und insbesondere des Verriegelungsmechanismus ist im Folgenden unter Bezugnahme auf Figuren 2 bis 4 beschrieben. Figur 2 zeigt einen Zustand, in dem das Kraftfahrzeug einer frontalen Kollision unterliegt und demnach eine Kollisionslast über die Stoßfängerverkleidung 21 auf das erste Element 3 wirkt, wodurch das erste Element 3 in Richtung des zweiten Elements 5 und damit des Stoßfängerquerträgers 23 verschoben wird. Hierbei kommt das Verriegelungselement 7 mit der Kontaktfläche 13, die an einer Innenseite des zweiten Elements 5 ausgebildet ist, in Kontakt. Die Kontaktfläche 13 ist in Fahrzeuglängsrichtung, das heißt in Verschieberichtung des ersten Elements 3 mit einer Steigung versehen, so dass durch ein Zusammenwirkten zwischen dem Verriegelungselement 7 und der Kontaktfläche 13 das Verriegelungselement 7 im Verlaufe der Verschiebung in Querrichtung bewegt wird und damit gegen die Federeinrichtung 9 drückt, so dass diese Federeinrichtung 9 vorgespannt wird. In Figur 2 ist der Zustand gezeigt, in dem eine maximale Vorspannung der Feder 9 erreicht ist.

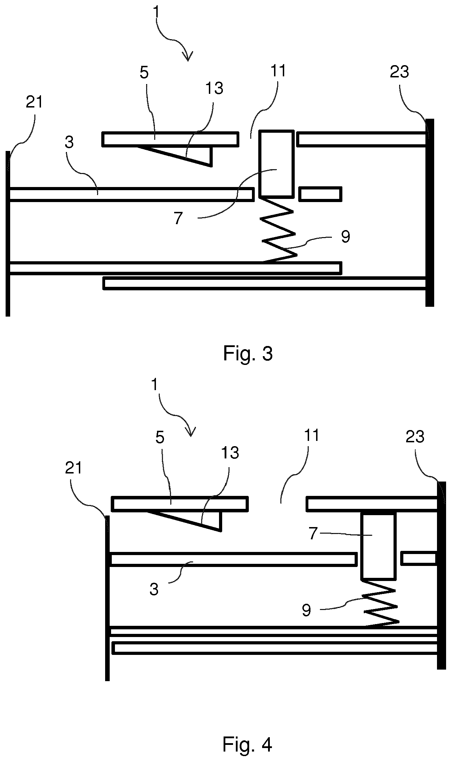

Figur 3 zeigt einen weiteren Verlauf der Kollision bei einer verhältnismäßig langsamen Verschiebegeschwindigkeit des ersten Elements 3 und damit einer verhältnismäßig geringen Kollisionsgeschwindigkeit. Nach einer maximalen Vorspannung der Feder 9 bzw. des Verriegelungselements 7 und einem Verlassen der Kontaktfläche 13 wird das Verriegelungselement 7 in Querrichtung in Richtung der Außenwand des zweiten Elements 5 gedrückt. Dabei greift das Verriegelungselement 7 mit einer Ausnehmung 11 in der Wand des zweiten Elements 5 ein. In diesem Zustand ist das Verriegelungselement 7 in formschlüssigen Eingriff sowohl mit dem ersten Element 3 als auch mit dem zweiten Element 5, so dass eine weitere Verschiebung des ersten Elements 3 relativ zu dem zweiten Element 5 durch das Verriegelungselement 7 blockiert ist. Sobald der in Figur 3 gezeigte Zustand erreicht ist, wirkt das Deformationselement 1 als steifes Element. In diesem Zustand kann das Deformationselement 1 Kollisionslasten von dem Kollisionsgegner direkt auf den Stoßfängerquerträger 23 und die dahinter liegende Crashstruktur des Kraftfahrzeugs übertragen. Wird eine bestimmte Kollisionslast überschritten, versagt das Deformationselement 1 durch plastisches Verformen oder sprödes Versagen und absorbiert somit Kollisionsenergie über eine vorgegebene Versagensstrecke von maximal der Länge des Deformationselements 1 im verriegelten Zustand.

Das Deformationselement 1 ist insbesondere derart ausgelegt, dass es bei Kollisionsgeschwindigkeiten von beispielsweise weniger als 4 km/h eine Kollisionslast ohne Verformung auf die Crashstruktur übertragen kann.

Bei einer größeren Kollisionsgeschwindigkeit, die jedoch für einen Fußgängerschutz noch nicht relevant ist, wie beispielsweise einer Geschwindigkeit zwischen 4 km/h und 20 km/h, wird das Deformationselement 1 bei einem bestimmten Lastniveau verformt, so dass das Deformationselement 1 zum Abbau von Kollisionsenergie beiträgt, ohne dass beispielsweise hinter dem Stoßfängerquerträger 23 vorhandene Bauelemente, wie beispielsweise ein Kühler, beschädigt werden.

Figur 4 zeigt einen Zustand, bei dem kein formschlüssiger Eingriff des Verriegelungselements 7 und damit des ersten Elements 3 mit dem zweiten Element 5 erfolgt ist und demnach das erste Element 3 weiter in Richtung des Stoßfängerquerträgers 23 relativ zu dem zweiten Element 5 verschoben wurde. Der in Figur 4 gezeigte Zustand wird bei einer höheren Verschiebegeschwindigkeit und damit einer höheren Kollisionsgeschwindigkeit erreicht. Beispielsweise kann das Deformationselement 1 so konstruiert sein, so dass ab einer Kollisionsgeschwindigkeit von ungefähr 20 km/h keine Verrastung zwischen dem ersten Element 3 und dem zweiten Element 5 erfolgt und das Deformationselement damit insgesamt über eine längere Verformungsstrecke deutlich weicher reagiert, als das bei dem in Figur 3 gezeigten verriegelten Zustand bzw. eingerasteten Zustand der Fall ist.

Aufgrund einer Massenträgheit des Verriegelungselements 7 benötigt das Verriegelungselement 7 eine gewisse Zeit, bis es hinreichend weit in Querrichtung bewegt wird. Bei der schnellen Verschiebegeschwindigkeit des ersten Elements 3 führt dies dazu, dass das Verriegelungselement 7 nicht in die Ausnehmung 11 des zweiten Elements 5 eingreifen kann, so dass das erste Element 3 weiter in Richtung der Stoßfängerquerträgers 23 verschoben werden kann und das Verriegelungselement 7 mit einer Innenseite des zweiten Element 5 in Kontakt kommt und entlang der Innenseite verschoben werden kann. Es kommt zu keinem formschlüssigen Eingriff zwischen dem Verriegelungselement und dem zweiten Element 5.

Ab der Kollisionsgeschwindigkeit von beispielsweise 20 km/h ist es wichtig, dass das Frontend des Kraftfahrzeugvorderwagens, und insbesondere die Stoßfängerverkleidung in Verbindung mit dem Deformationselement 1 hinreichend weich bei einem geringen Verformungskraftniveau reagiert.

Dies ist erfindungsgemäß durch den beschriebenen Verriegelungsmechanismus verwirklicht, der auf Grundlage einer Massenträgheit des Verriegelungselements 7 in Zusammenwirkung mit der Federkraft der Feder 9 funktioniert.

Somit kann ein Zielkonflikt gelöst werden, der zum Einen bei sehr niedrigen Kollisionsgeschwindigkeiten eine hinreichend große Steifigkeit des Deformationselements 1 bzw. ein hinreichend großes Verformungskraftniveau des Deformationselements 1 erfordert und bei einer etwas höheren Kollisionsgeschwindigkeit einen hinreichenden Fußgängerschutz durch ein niedriges Verformungskraftniveau gewährleistet.

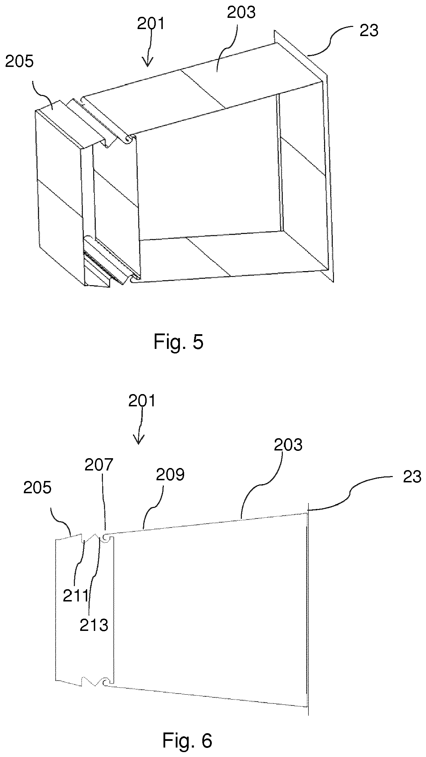

Es folgt unter Bezugnahme auf Figuren 5 bis 9 eine Beschreibung einer Fußgängerschutzvorrichtung gemäß einem zweiten Ausführungsbeispiel der vorliegenden Erfindung. Die Fußgängerschutzvorrichtung des zweiten Ausführungsbeispiels ist funktionell analog der Fußgängerschutzvorrichtung des ersten Ausführungsbeispiels aufgebaut, unterscheidet sich jedoch in strukturellen Einzelheiten von dem ersten Ausführungsbeispiel, wobei im Folgenden insbesondere diese Unterschiede erläutert sind.

Figur 5 zeigt in einer perspektivischen Ansicht die Fußgängerschutzvorrichtung des zweiten Ausführungsbeispiels mit einem Deformationselement 201, das an einer Vorderseite eines Stoßfängerquerträgers 23 eines Frontends eines Kraftfahrzeugvorderwagens angebracht ist. Somit ist das Deformationselement 201 in einem Raum zwischen einer nicht gezeigten Stoßfängerverkleidung und dem Stoßfängerquerträger 23 angeordnet. Das Deformationselement 201 weist ein erstes Element 203 und ein zweites Element 205 auf, die verriegelbar relativ zueinander verschiebbar sind. Insbesondere ist das zweite Element 205 im Falle einer frontalen Kollisionslast in Richtung des Stoßfängerquerträgers 23 und damit in Richtung des ersten Elements 203 verschiebbar. Das erste Element 203 ist an dem Stoßfängerquerträger 23 angeordnet.

Wie in Figur 6 gezeigt ist, hat das erste Element 203 zwei gegenüber liegende Wände 209, die sich im Wesentlichen in Fahrzeuglängsrichtung erstrecken, wobei die nachfolgende Erläuterung sich lediglich auf die obere Wand 209 bezieht, wobei die untere Wand symmetrisch hierzu aufgebaut ist. Ein vorderes Ende 207 der Wand 209 ist geeignet mit dem zweiten Element 205 in Eingriff. Das vordere Ende 207 der Wand wirkt als Verriegelungselement gemäß der vorliegenden Erfindung und hat eine hakenförmige Krümmung. Ferner bildet die Wand 209 an sich eine erfindungsgemäße Federeinrichtung, die in eine Querrichtung elastisch vorspannbar ist. Ferner weist das zweite Element 205 eine Ausnehmung 211 auf, in die das Verriegelungselement 207 eingreifen kann. Darüber hinaus hat das zweite Element 205 eine Kontaktfläche 213 mit einer Steigung in Fahrzeuglängsrichtung, über die das das vordere Ende der Wand 207 als Verriegelungselement mittels der Wand 209 als Federeinrichtung vorspannbar ist.

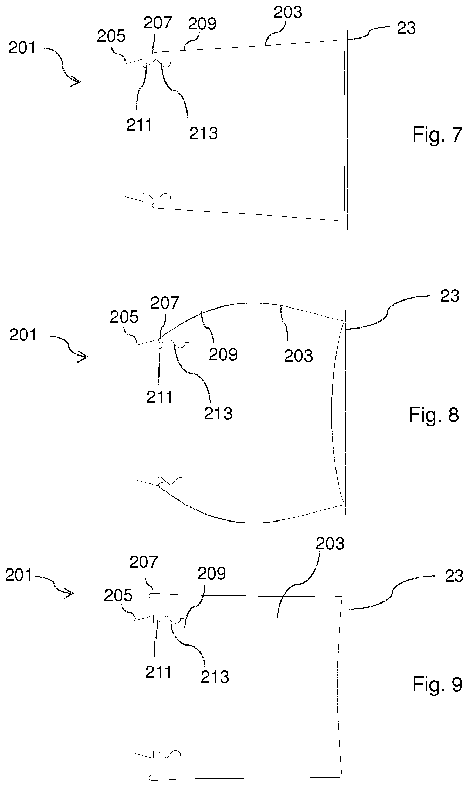

Figur 7 zeigt einen Zustand, in dem das Verriegelungselement 207 durch den Kontakt mit der Kontaktfläche 213 über die Wand und Federeinrichtung 209 maximal vorgespannt wurde. Der in Figur 7 gezeigte Zustand wird zu Beginn einer Frontalkollision erreicht, bei dem das zweite Element 205 in Richtung des ersten Elements 203 relativ zu dem ersten Element 203 verschoben wird.

Figur 8 zeigt einen Zustand, in dem das vordere Ende der Wand 207 als Verriegelungselement des Verriegelungsmechanismus des Deformationselements 201 bei einer verhältnismäßig niedrigen Geschwindigkeit, beispielsweise kleiner 20 km/h, des zweiten Elements 205 mit der Ausnehmung 211 in formschlüssigen Eingriff gelangt ist und somit eine weitere Verschiebung des zweiten Elements 205 relativ zu dem ersten Element 203 verhindert.

Eine Wirkung des Deformationselements 201 ist dabei analog dem Deformationselements 1 des ersten Ausführungsbeispiels. Bei einer sehr niedrigen Kollisionsgeschwindigkeit verhält sich das Deformationselement 201 hinreichend steif und kann somit Kollisionslasten direkt auf die dahinter liegende Crashstruktur übertragen. Bei einer etwas höheren Kollisionsgeschwindigkeit von beispielsweise 4 km/h bis 20 km/h wird das Deformationselement 201 durch plastisches und/oder sprödes Versagen bei einem bestimmten Kraftniveau verformt, so dass das Deformationselement 201 zu einem Kollisionsenergieabbau beitragen kann.

In Figur 9 ist ein Zustand gezeigt, in dem das Deformationselement 201 sich im Verlaufe der Kollision nicht im verrasteten Zustand befindet. Diesen Zustand wird ab einer gewissen Verschiebegeschwindigkeit bzw. Kollisionsgeschwindigkeit des zweiten Elements 205 relativ zu dem ersten Element 203 erreicht, bei der eine Massenträgheit des Verriegelungselements 207 dazu führt, dass es nicht in formschlüssigen Eingriff mit der Ausnehmung 211 des zweiten Elements 205 kommt. Hierdurch kann das zweite Element 205 bei einer geringeren Last in Richtung des Stoßfängerquerträgers 23 verschoben werden, wobei die Wände des ersten Elements 203 ohne Eingriff mit dem zweiten Element 205 bei einem verhältnismäßig niedrigen Kraftniveau weggedrückt werden können.

Damit ist das Deformationselement 201 des zweiten Ausführungsbeispiels analog dem Deformationselement 1 des ersten Ausführungsbeispiels bei einer verhältnismäßig hohen Kollisionsgeschwindigkeit von beispielsweise mehr als 20 km/h zu Gunsten eines Fußgängerschutzes weicher.

## Patentansprüche

1. Fußgängerschutzvorrichtung für Kraftfahrzeug , wobei die Fußgängerschutzvorrichtung einen Stoßfängerquerträger (23) ein Deformationselement (1; 101), das an einer Außenseite des Stoßfängerquerträgers (23) angeordnet ist und das ein erstes Element (3; 203) und ein zweites Element (5; 205) aufweist, die bei einer Kollision relativ zueinander in Richtung des Stoßfängerquerträgers (23) verschiebbar sind, und einen mechanischen Verriegelungsmechanismus aufweist, der abhängig von einer Verschiebegeschwindigkeit unter Ausnutzung einer Massenträgheit eines Verriegelungselements (7; 207), das an dem ersten Element (3; 203) oder dem zweiten Element angeordnet ist, zwischen einem verriegelten Zustand, bei dem eine Verschiebung des ersten Elements (3; 203) relativ zu dem zweiten Element (5; 205) zumindest teilweise unterbunden ist/wird, und einem entriegelten Zustand, bei dem eine Verschiebung des ersten Elements (3; 203) zugelassen ist, verstellbar ist, wobei das Verriegelungselement (7; 207) mittels einer Federeinrichtung (9; 209) vorspannbar ist, wobei das Verriegelungselement (7; 207) und die Federeinrichtung (9; 209) derart zusammenwirkend ausgebildet sind, dass mit einer Verschiebung des ersten Elements (3; 203) und des zweiten Elements (5; 205) relativ zueinander das Verriegelungselement (3; 203) mittels der Federeinrichtung (9; 209) vorspannbar ist, bevor das Verriegelungselement (3; 203) den verriegelten Zustand erreichen kann.

2. Fußgängerschutzvorrichtung nach Patentanspruch 1, wobei der Verriegelungsmechanismus unterhalb eines Kollisionsgeschwindigkeitsschwellwerts verriegelt und bei Erreichen des Kollisionsgeschwindigkeitsschwellwerts entriegelt.

3. Fußgängerschutzvorrichtung nach Patentanspruch 1 oder 2, wobei das Verriegelungselement (7; 207) bei einer Verschiebung des ersten Elements (3; 203) und des zweiten Elements (5; 205) relativ zueinander in eine Vertiefung (11; 211) des zweiten Elements (5; 205) oder ersten Elements (3; 203) derart einrastbar ist, dass eine weitere Verschiebung des ersten Elements (3; 203) und des zweiten Elements (5; 205) relativ zueinander unterbunden ist.

4. Fußgängerschutzvorrichtung nach Patentanspruch 3, wobei die Federeinrichtung (9; 209) in einem Ruhezustand im Wesentlichen entspannt ist, und wobei insbesondere der Verriegelungsmechanismus eine Kontaktfläche (13; 213) aufweist, über die das Verriegelungselement (7; 207) gegen die Federkraft der Federeinrichtung (9; 209) bewegbar und damit vorspannbar ist, bevor das Verriegelungselement (7; 207) die Vertiefung (11; 211) erreicht.

5. Fußgängerschutzvorrichtung nach einem der Patentansprüche 3 und 4, wobei das Verriegelungselement (7; 207), die Federeinrichtung (9; 209) und die Vertiefung (11; 211) derart zusammenwirkend ausgebildet sind, dass bei einer langsamen Verschiebung des ersten Elements (3; 203) und des zweiten Elements (5; 205) relativ zueinander das Verriegelungselement (7; 207) in die Vertiefung (11; 211) einrastet und bei einer schnellen Verschiebung des ersten Elements (3; 203) und des zweiten Element (5; 205) relativ zueinander das Verriegelungselement (7; 207) nicht in die Vertiefung (11; 211) einrastet.

6. Fußgängerschutzvorrichtung nach einem der Patentansprüche 1 bis 5, wobei die Federeinrichtung (9; 209) zusätzlich eine Dämpfungseinrichtung aufweist, die eine Bewegung des Verriegelungselements (7; 207) geeignet dämpft.

7. Fußgängerschutzvorrichtung für ein Kraftfahrzeug , wobei die Fußgängerschutzvorrichtung einen Querträger (23), insbesondere einen Stoßfängerquerträger (23) und ein Deformationselement (1; 101) aufweist, das an dem Querträger (23) angeordnet ist und dessen Deformationsbereich an einer Außenseite des Querträgers ausgebildet ist,
wobei das Deformationselement ein erstes Element (3; 203) und ein zweites Element (5; 205), die bei einer Kollision relativ zueinander in Richtung des Querträgers (23) verschiebbar sind, aufweist,
wobei das Deformationselement einen mechanischen Verriegelungsmechanismus aufweist, der ein bewegliches, mit einer Federeinrichtung (9) vorspannbares oder vorgespanntes Verriegelungselement (7) aufweist, das an dem ersten Element (3) oder dem zweiten Element angeordnet ist und mit einer Vertiefung (11) oder Stufe an dem anderen von dem ersten Element und dem zweiten Element (5) formschlüssig verrastbar ist,
und wobei das Verriegelungselement (7; 207) und die Federeinrichtung (9; 209) derart zusammenwirkend ausgebildet sind, dass mit einer Verschiebung des ersten Elements (3; 203) und des zweiten Elements (5; 205) relativ zueinander das Verriegelungselement (3; 203) mittels der Federeinrichtung (9; 209) vorspannbar ist, bevor das Verriegelungselement (3; 203) mit der Vertiefung (11) oder der Stufe verrasten kann.

8. Fußgängerschutzvorrichtung nach einem der Patentansprüche 4, 5 und 7, wobei der Verriegelungsmechanismus eine Kontaktfläche (13) aufweist, die derart angeordnet und ausgebildet ist, dass bei einer Relativbewegung des ersten Elements (3) und des zweiten Elements zueinander das Verriegelungselement (7) entlang der Kontaktfläche (13) in Kontakt mit der Kontaktfläche (13) gegen die Federkraft der Federeinrichtung (9) bewegbar und damit vorspannbar ist, bevor das Verriegelungselement (7) den Formschluss mit der Vertiefung (11) oder der Stufe erreicht.

9. Fußgängerschutzvorrichtung nach Patentanspruch 8, wobei die Federeinrichtung (9), das Verriegelungselement (7) und die Kontaktfläche (13) derart zusammenwirken, dass
bei einer hohen Verschiebegeschwindigkeit, die größer oder gleich einem Kollisionsgeschwindigkeitsschwellwerts ist, bei Eingriff des Verriegelungselements (7) mit der Kontaktfläche (13) eine Bewegung des Verriegelungselements (7) entlang der Kontaktfläche (13) ermöglicht ist und das Verriegelungselement (7) bei einem Verlassen der Kontaktfläche (13) aufgrund einer Massenträgheit des Verriegelungselement (7) über die Vertiefung (11) oder Stufe springt, damit nicht formschlüssig einrastet und eine weitere Verschiebung des ersten Elements (3) und des zweiten Elements (5) zueinander ermöglicht ist, und dass
bei der niedrigen Verschiebegeschwindigkeit, die kleiner des bestimmten Kollisionsgeschwindigkeitsschwellwerts ist, bei Eingriff des Verriegelungselements (7) mit der Kontaktfläche (13) eine Bewegung des Verriegelungselements (7) entlang der Kontaktfläche (13) ermöglicht ist und das Verriegelungselement (7) bei der langsamen Verschiebegeschwindigkeit nach einem Verlassen der Kontakfläche mit der Vertiefung (11) oder Stufe formschlüssig einrastet.

10. Fußgängerschutzvorrichtung nach Patentanspruch 8 oder 9, wobei die Kontaktfläche (13) schräg zu einer Verschieberichtung des ersten Elements (3) und des zweiten Elements (5) relativ zueinander ausgebildet ist und insbesondere in die Verschieberichtung des Verriegelungselements (7) in Richtung der Kontaktfläche (13) eine Steigung aufweist.

11. Fußgängerschutzvorrichtung nach einem der Patentansprüche 1 bis 10, wobei ein Deformationsbereich des Deformationselements (1) zwischen einer Fahrzeugaußenhaut (21) bzw. einer Stoßfängerverkleidung (21) und dem Querträger (23) bzw. dem Stoßfängerquertärger (23) ausgebildet ist.

12. Fußgängerschutzvorrichtung nach einem der Patentansprüche 1 bis 11, wobei das zweite Element (5) an dem Querträger (23) bzw. dem Stoßfängerquerträger (23) fixiert ist oder integraler Bestandteil des Querträgers (23) bzw. des Stoßfängerquerträgers (23) ist.

13. Fußgängerschutzvorrichtung nach Patentanspruch 12, wobei das erste Element (3) in eine Öffnung des Querträgers (23) bzw. des Stoßfängerquerträgers (23) hinein verschiebbar ist.

14. Fußgängerschutzvorrichtung nach einem der Patentansprüche 1 bis 13, wobei das Deformationselement (1; 101) angepasst ist, in einem verriegelten Zustand des Verriegelungsmechanismus Kollisionsenergie durch plastische Verformung und/oder sprödes Versagen des Deformationselements (1; 102) über eine vorgegebene Deformationsstrecke, beispielsweise in einem Bereich von 60 mm bis 110 mm, zu absorbieren.

15. Fußgängerschutzvorrichtung nach Patentanspruch 14, wobei eine Energieabsorption des Deformationselements (1; 101) im Fall des entriegelten Zustands des Verriegelungsmechanismus geringer ist als eine Energieabsorption des Deformationselements (1; 101) im Fall des verriegelten Zustands des Verriegelungsmechanismus.

16. Fußgängerschutzvorrichtung nach einem der Patentansprüche 1 bis 15, wobei das Deformationselement (1; 101) eine Länge von 50 bis 150 mm, bevorzugt 70 bis 110 mm aufweist, und wobei insbesondere das erste Element (3; 203) und das zweite Element (5; 205) relativ zueinander in einem entriegelten Zustand über eine Strecke von 60 bis 110 mm bewegbar sind.

17. Fußgängerschutzvorrichtung nach einem der Patentansprüche 1 bis 16, wobei das erste Element (3) ein zylinderförmiges Element ist, das in einer entsprechenden Führung des zweiten Elements (5) verschiebbar ist, und wobei insbesondere das Verriegelungselement (7) an dem ersten Element (3; 203) oder dem zweiten Element (5; 205) gelagert ist.

18. Fußgängerschutzvorrichtung nach einem der Patentansprüche 1 bis 17, wobei das erste Element (203) eine elastisch verformbare Wand, die die Federeinrichtung (209) ausbildet, mit einem Ende aufweist, das das Verriegelungselement (207) ausbildet.

## Claims

1. A pedestrian protection device for a motor vehicle, the pedestrian protection device having a bumper crossbeam (23), a deformation element (1; 101) arranged on an outer side of the bumper crossbeam (23) and having a first element (3; 203) and a second element (5; 205) which are displaceable relative to one another in the direction of the bumper crossbeam (23) in the event of a collision, and having a mechanical locking mechanism which, in dependence on a displacement speed and while exploiting a mass inertia of a locking element (7; 207) which is arranged on the first element (3; 203) or the second element, is adjustable between a locked state in which a displacement of the first element (3; 203) relative to the second element (5; 205) is/becomes at least partially prevented, and an unlocked state in which a displacement of the first element (3; 203) is allowed, the locking element (7; 207) being preloadable by means of a spring device (9; 209), the locking element (7; 207) and the spring device (9; 209) being designed to cooperate in such a way that, with a displacement of the first element (3; 203) and the second element (5; 205) relative to one another, the locking element (3; 203) is preloadable by means of the spring device (9; 209) before the locking element (3; 203) can achieve the locked state.

2. A pedestrian protection device according to Claim 1, the locking mechanism locking below a collision speed threshold value and
unlocking when the collision speed threshold value is reached.

3. A pedestrian protection device according to Claim 1 or 2, in which, in the event of a displacement of the first element (3; 203) and the second element (5; 205) relative to one another, the locking element (7; 207) can snap into a recess (11; 211) of the second element (5; 205) or of the first element (3; 203) in such a way that a further displacement of the first element (3; 203) and the second element (5; 205) relative to one another is prevented.

4. A pedestrian protection device according to Claim 3,
the spring device (9; 209) being essentially slackened in an idle state and the locking mechanism in particular having a contact surface (13; 213) across which the locking element (7; 207) is displaceable against the spring power of the spring device (9; 209) and is thus preloadable before the locking element (7; 207) reaches the recess (11; 211).

5. A pedestrian protection device according to one of Claims 3 and 4,
the locking element (7; 207), the spring device (9; 209) and the recess (11; 211) being designed to cooperate in such a way that, with a slow displacement of the first element (3; 203) and the second element (5; 205) relative to one another, the locking element (7; 207) snaps into the recess (11; 211) and, with a quick displacement of the first element (3; 203) and the second element (5; 205) relative to one another, the locking element (7; 207) does not snap into the recess (11; 211).

6. A pedestrian protection device according to one of Claims 1 to 5, the spring device (9; 209) also having a damping device which appropriately dampens a displacement of the locking element (7; 207).

7. A pedestrian protection device for a motor vehicle, the pedestrian protection device having a crossbeam (23), in particular
a bumper crossbeam (23) and a deformation element (1; 101) which is arranged on the crossbeam (23) and the deformation range of which is formed on an outer side of the crossbeam,
the deformation element having a first element (3; 203) and a second element (5; 205) which are displaceable relative to one another in the direction of the crossbeam (23) in the event of a collision,
the deformation element having a mechanical locking mechanism which has a displaceable locking element (7) which is preloadable or preloaded with a spring device (9) and is arranged on the first element (3) or the second element and can be positively engaged with a recess (11) or step on the other of the first element and the second element (5),
and the locking element (7; 207) and the spring device (9; 209) being designed to cooperate in such a way that, with a displacement of the first element (3; 203) and the second element (5; 205) relative to one another, the locking element (3; 203) is preloadable by means of the spring element (9; 209) before the locking element (3; 203) can engage with the recess (11) or the step.

8. A pedestrian protection device according to one of Claims 4, 5 and 7,
the locking mechanism having a contact surface (13) which is arranged and designed in such a way that, with a displacement of the first element (3) and the second element relative to one another, the locking element (7) is displaceable along the contact surface (13) in contact with the contact surface (13) against the spring power of the spring device (9) and is thus preloadable before the locking element (7) achieves the positive locking with the recess (11) or the step.

9. A pedestrian protection device according to Claim 8, the spring device (9), the locking element (7) and the contact surface (13) cooperating in such a way that,
with a high displacement speed which is greater than or equal to a collision speed threshold value,
displacement of the locking element (7) along the contact surface (13) is possible when the locking element (7) is engaged with the contact surface (13) and the locking element (7) jumps above the recess (11) or step when leaving the contact surface (13) due to a mass inertia of the locking element (7) and thus does not enter into a positively locking engagement and a further displacement of the first element (3) and the second element (5) relative to one another is possible and that,
with the low displacement speed, which is smaller than the specified collision speed threshold value, displacement of the locking element (7) along the contact surface (13) is possible when the locking element (7) is engaged with the contact surface (13) and, with the slow displacement speed, after leaving the contact surface, the locking element (7) engages with the recess (11) or step in a positively locking manner.

10. A pedestrian protection device according to either of Claims 8 or 9, the contact surface (13) being arranged obliquely to a direction of displacement of the first element (3) and the second element (5) relative to one another and in particular having an incline in the direction of displacement of the locking element (7) in the direction of the contact surface (13).

11. A pedestrian protection device according to one of Claims 1 to 10, a deformation area of the deformation element (1) being formed between a vehicle external shell (21) or a bumper covering (21) and the crossbeam (23) or the bumper crossbeam (23).

12. A pedestrian protection device according to one of Claims 1 to 11, the second element (5) being fixed to the crossbeam (23) or the bumper crossbeam (23) or forming an integral component of the crossbeam (23) or the bumper crossbeam (23).

13. A pedestrian protection device according to Claim 12, the first element (3) being displaceable into an opening of the crossbeam (23) or the bumper crossbeam (23).

14. A pedestrian protection device according to one of Claims 1 to 13, the deformation element (1; 101) being adjusted in such a way that, when the locking mechanism is in a locked state, it absorbs collision energy through plastic deformation and/or brittle fracture of the deformation element (1; 102) across a specified deformation distance, for example in a range from 60 mm to 110 mm.

15. A pedestrian protection device according to Claim 14, an energy absorption of the deformation element (1; 101) when the locking mechanism is in the unlocked state being lower than an energy absorption of the deformation element (1; 101) when the locking mechanism is in the locked state.

16. A pedestrian protection device according to one of Claims 1 to 15, the deformation element (1; 101) having a length of 50 to 150 mm, preferably 70 to 110 mm, and in particular the first element (3; 203) and the second element (5; 205) being displaceable relative to one another in an unlocked state across a distance of 60 to 110 mm.

17. A pedestrian protection device according to one of Claims 1 to 16, the first element (3) being a cylinder-shaped element which is displaceable in a corresponding guide of the second element (5) and in particular the locking element (7) being positioned on the first element (3; 203) or the second element (5; 205).

18. A pedestrian protection device according to one of Claims 1 to 17, the first element (203) having an elastically deformable wall which forms the spring device (209) with an end which forms the locking element (207).

## Revendications

1. Dispositif de protection des piétons destiné à un véhicule ce dispositif de protection des piétons comportant une traversé de pare-chocs (23), un élément de déformation (1 ; 101) qui est monté sur la face externe de la traverse de pare-chocs (23) et comporte un premier élément (3 ; 203) et un second élément (5 ; 205), qui, dans le cas d'une collision, peuvent être décalés l'un par rapport à l'autre dans la direction de la traverse de pare-chocs (23), et un mécanisme de verrouillage mécanique qui, en fonction de la vitesse de décalage en utilisant l'inertie d'un élément de verrouillage (7 ; 207) qui est monté entre le premier élément (3 ; 203) et le second élément peut être déplacé entre une position verrouillée dans laquelle un décalage du premier élément (3 ; 203) par rapport au second élément (5 ; 205) est/ou devient au moins partiellement interdit et un état déverrouillé dans lequel un décalage du premier élément (3 ; 203) est possible, l'élément de verrouillage (7 ; 207) pouvant être précontraint au moyen d'un dispositif de ressort (9 ; 209), l'élément de verrouillage (7 ; 207) et le dispositif de ressort (9 ; 209) étant réalisés de façon à coopérer de sorte qu'avec un décalage du premier élément (3 ; 203) et du second élément (5 ; 205), l'un par rapport à l'autre, l'élément de verrouillage (3 ; 203) puisse être précontraint au moyen du dispositif de ressort (9 ; 209) avant que cet élément de verrouillage (3 ; 203) puisse atteindre l'état verrouillé.

2. Dispositif de protection des piétons conforme à la revendication 1,
dans lequel le mécanisme de verrouillage effectue un verrouillage au-dessous d'une valeur de seuil d'une vitesse de collision et un déverrouillage lorsque la vitesse de collision a atteint la valeur de seuil.

3. Dispositif de protection des piétons conforme à la revendication 1 ou 2,
dans lequel l'élément de verrouillage (7 ; 207) peut, dans le cas d'un décalage du premier élément (3 ; 203) et du second élément (5 ; 205) l'un par rapport à l'autre être encliqueté dans un renfoncement (11 ; 211) du second élément (5 ; 205) ou du premier élément (3 ; 203) de sorte que la poursuite du décalage du premier élément (3 ; 203) et du second élément (5 ; 205) l'un par rapport à l'autre soit empêchée.

4. Dispositif de protection des piétons conforme à la revendication 3, dans lequel le dispositif de ressort (9 ; 209) est essentiellement détendu dans un état de repos, et, en particulier, le mécanisme de verrouillage comporte une surface de contact (13 ; 213) sur laquelle l'élément de verrouillage (7 ; 207) peut être déplacé contre la force de rappel du dispositif de ressort (9 ; 209) et ainsi être précontraint avant que cet élément de verrouillage (7 ; 207) n'ait atteint le renfoncement (11 ; 211).

5. Dispositif de protection des piétons conforme à l'une des revendications 3 et 4,
dans lequel l'élément de verrouillage (7 ; 207), le dispositif de ressort (9 ; 209) et le renfoncement (11 ; 211) sont réalisés pour coopérer de sorte que, dans le cas d'un décalage lent du premier élément (3 ; 203) et du second élément (5 ; 205), l'un par rapport à l'autre, l'élément de verrouillage (7 ; 207) s'encliquète dans le renfoncement (11 ; 211), et qu'en cas de décalage rapide du premier élément (3 ; 203) et du second élément (5 ; 205) l'un par rapport à l'autre, l'élément de verrouillage (7 ; 207) ne s'encliquète pas dans le renfoncement (11 ; 211).

6. Dispositif de protection des piétons conforme à l'une des revendications 1 à 5,
dans lequel le dispositif de ressort (9 ; 209) comporte en outre un dispositif d'amortissement qui amortit, de façon adaptée le déplacement de l'élément de verrouillage (7 ; 207).

7. Dispositif de protection des piétons destiné à un véhicule,
ce dispositif de protection des piétons comportant une traverse (23), en particulier une traverse de pare-chocs (23) et un élément de déformation (1 ; 101) qui est monté sur la traverse (23) et dont la zone de déformation est formée sur la face externe de la traverse,
dans lequel l'élément de déformation comporte un premier élément (3 ; 203) et un second élément (5 ; 205) qui, dans le cas d'une collision, peuvent être décalés l'un par rapport à l'autre, dans la direction de la traverse (23),
l'élément de déformation comporte un mécanisme de verrouillage mécanique qui comporte un élément de verrouillage mobile (7) pouvant être précontraint ou précontraint avec un dispositif de ressort (9), qui est installé sur le premier élément (3) ou sur le second élément et peut être encliqueté par une liaison par la forme avec un renfoncement (11) ou un gradin situé sur l'autre élément parmi le premier élément et le second élément (5), et
l'élément de verrouillage (7 ; 207) et le dispositif de ressort (9 ; 209) sont réalisés pour coopérer de sorte que, avec un décalage du premier élément (3 ; 203) et du second élément (5 ; 205) l'un par rapport à l'autre, l'élément de verrouillage (3 ; 203) puisse être précontraint au moyen du dispositif de ressort (9 ; 209) avant que cet élément de verrouillage (3 ; 203) puisse s'encliqueter avec le renfoncement (11) ou le gradin.

8. Dispositif de protection des piétons conforme à l'une des revendications 4, 5 et 7,
dans lequel le mécanisme de verrouillage comporte une surface de contact (13) qui est installée et réalisée de sorte que, en présence d'un déplacement relatif du premier élément (3) et du second élément l'un par rapport à l'autre, l'élément de verrouillage (7) puisse être déplacé le long de la surface de contact (13) en étant en contact avec cette surface de contact (13) contre la force élastique du dispositif de ressort (9) et ainsi précontraint avant que l'élément de verrouillage (7) n'ait atteint la liaison par la forme avec le renfoncement (11) ou le gradin.

9. Dispositif de protection des piétons conforme à la revendication 8,
dans lequel le dispositif de ressort (9), l'élément de verrouillage (7) et la surface de contact (13) coopèrent de sorte qu'en présence d'une vitesse de décalage élevée qui est supérieure ou égale à une valeur de seuil de la vitesse de collision, lors de la mise en prise de l'élément de verrouillage (7) avec la surface de contact (13) un déplacement de l'élément de verrouillage (7) le long de la surface de contact (13) soit possible, et que, lorsqu'il a quitté la surface de contact (13) en raison de son inertie, l'élément de verrouillage (7) saute sur le renfoncement (11) ou le gradin pour qu'il ne s'encliquète pas, par une liaison par la forme et qu'un décalage ultérieur du premier élément (3) et du second élément (5) l'un par rapport à l'autre soit possible, et
qu'en présence d'une vitesse de translation faible, qui est inférieure au seuil de vitesse de collision prédéfini, lors de la mise en prise de l'élément de verrouillage (7) avec la surface de contact (13), un déplacement de l'élément de verrouillage (7) le long de la surface de contact (13) soit possible, et que, en présence de la vitesse de translation lente, après avoir quitté la surface de contact, l'élément de verrouillage (7) s'encliquète par une liaison par la forme avec le renfoncement (11) ou le gradin.

10. Dispositif de protection des piétons conforme à la revendication 8 ou 9,
dans lequel la surface de contact (13) est oblique par rapport à la direction de décalage du premier élément (3) et du second élément (5) l'un par rapport à l'autre et comporte en particulier une pente dans la direction de décalage de l'élément de verrouillage (7) en direction de la surface de contact (13).

11. Dispositif de protection des piétons conforme à l'une des revendications 1 à 10,
dans lequel la zone de déformation de l'élément de déformation (1) est formée entre une coque externe (21) du véhicule ou un habillage de pare-chocs (21) et la traverse (23) ou la traverse de pare-chocs (23).

12. Dispositif de protection des piétons conforme à l'une des revendications 1 à 11,
dans lequel le second élément (5) est fixé sur la traverse (23) ou la traverse de pare-chocs (23) ou fait partie intégrante de la traverse (23) ou de la traverse de pare-chocs (23).

13. Dispositif de protection des piétons conforme à la revendication 12, dans lequel le premier élément (3) peut être décalé dans une ouverture de la traverse (23) ou de la traverse (23) de pare-chocs.

14. Dispositif de protection des piétons conforme à l'une des revendications 1 à 13,
dans lequel l'élément de déformation (1 ; 101) est susceptible, à l'état verrouillé du mécanisme de verrouillage, d'absorber une énergie de collision par déformation plastique et/ou par rupture par fragilité de cet élément de déformation (1 ; 102) sur un trajet de déformation prédéfini, par exemple, dans une zone de 60 mm à 110 mm.

15. Dispositif de protection des piétons conforme à la revendication 14, dans lequel l'absorption d'énergie de l'élément de déformation (1 ; 101) à l'état déverrouillé du mécanisme de verrouillage est plus faible que l'absorption d'énergie de l'élément de déformation (1 ; 101) à l'état verrouillé du mécanisme de verrouillage.

16. Dispositif de protection des piétons conforme à l'une des revendications 1 à 15,
dans lequel l'élément de déformation (1 ; 101) a une longueur de 50 à 150 mm, de préférence de 70 à 110 mm, et en particulier le premier élément (3 ; 203) et le second élément (5 ; 205) sont mobiles l'un par rapport à l'autre, sur un trajet de 60 à 110 mm à l'état déverrouillé.

17. Dispositif de protection des piétons conforme à l'une des revendications 1 à 16,
dans lequel le premier élément (3) est un élément cylindrique qui peut être décalé dans un guidage correspondant du second élément (5), et en particulier, l'élément de verrouillage (7) est monté sur le premier élément (3 ; 203) ou sur le second élément (5 ; 205).

18. Dispositif de protection des piétons conforme à l'une des revendications 1 à 17,
dans lequel le premier élément (203) comporte une paroi élastiquement déformable qui forme le dispositif de ressort (209) ayant une extrémité qui forme l'élément de verrouillage (207).
